# EUROPEAN PATENT APPLICATION

(11) **EP 2 634 678 A1**
(43) Date of publication of application: **04.09.2013**
(21) Application number: 12157246.5
(22) Date of filing: 28.02.2012
(51) Int. Cl.: G06F 3/048

(54) **Touch-sensitive navigation in a tab-based application interface**

(71) Applicant: BlackBerry Limited, Waterloo ON N2L 3W8 (CA)
(72) Inventor: Martin Jr., Richard Eugene, Apex, NC North Carolina 27539 (US)
(74) Representative: Patel, Binesh

(57) **Abstract**

A method is provided for navigation in a tab-based application interface on a touch-sensitive display of a portable electronic device. A start of a touch contact initiating proximate to a first edge of the touch-sensitive display is detected. An end of the touch contact terminating proximate to a second edge of the touch sensitive display is detected. An angular gesture can then be determined when the start of the touch contact and the end of the touch contact are from the first edge being perpendicular to the second edge of the touch-sensitive display. Content associated with a tab on the touch-sensitive display in the tab-based application interface in response to the angular gesture is then displayed.

## Description

### TECHNICAL FIELD

The present disclosure relates to portable electronic devices and in particular to navigation in a tab-based application interface on the portable electronic device.

### BACKGROUND

In the area of graphical user interfaces (GUI), a tabbed document interface (TDI) or multiple document interfaces (MDI) allows multiple documents to be contained within a single window, using tabs as a navigational widget for switching between sets of documents. In TDI or MDI interfaces documents or windows reside under a single parent interface or window of a tab-based application interface. The tab-based application interface style most commonly associated with web browsers, web applications, text editors, and preference panes but can be provided in applications in which the user can transition between content views. In a browser, browser tabs allow a user to view multiple web pages in the same browser without the need to open a new browser session but require direct selection by the user. Portable electronic devices have gained widespread use and may provide a variety of TDI based functions or applications. Portable electronic devices include for example, smart phones, wireless personal digital assistants (PDAs), laptops or notebooks, tablets, media players, and gaming devices.

Accordingly, systems and methods that enable improved navigation between tabs in a tab-based application interface on a portable electronic device remains highly desirable.

### SUMMARY

In accordance with an aspect of the present disclosure there is provided a method for navigation in a tab-based application interface on a touch-sensitive display of a portable electronic device, the method comprising: detecting a start of a touch contact initiating proximate to a first edge of the touch-sensitive display; detecting an end of the touch contact terminating proximate to a second edge of the touch sensitive display; determining an angular gesture when the start of the touch contact and the end of the touch contact are from the first edge being perpendicular to the second edge of the touch-sensitive display; and displaying content associated with a tab on the touch-sensitive display in the tab-based application interface in response to the angular gesture.

In accordance with another aspect of the present disclosure there is provided a portable electronic device comprising: a touch-sensitive display; a processor coupled to the touch-sensitive display; and a memory coupled to the processor, the memory containing instructions for navigation in a tab-based application interface the instructions when executed by a processor performing: detecting a start of a touch contact initiating proximate to a first edge of the touch-sensitive display; detecting an end of the touch contact terminating proximate to a second edge of the touch sensitive display; determining an angular gesture when the start of the touch contact and the end of the touch contact are from the first edge being perpendicular to the second edge of the touch-sensitive display; and displaying content associated with a tab on the touch-sensitive display in the tab-based application interface in response to the angular gesture.

In accordance with yet another aspect of the present disclosure there is provided a computer readable memory containing instructions for navigation in a tab-based application interface on a touch-sensitive display of a portable electronic device, the instructions when executed by a processor performing a method for navigation in a tab-based application interface on a touch-sensitive display of a portable electronic device, the method comprising: detecting a start of a touch contact initiating proximate to a first edge of the touch-sensitive display; detecting an end of the touch contact terminating proximate to a second edge of the touch sensitive display; determining an angular gesture when the start of the touch contact and the end of the touch contact are from the first edge being perpendicular to the second edge of the touch-sensitive display; and displaying content associated with a tab on the touch-sensitive display in the tab-based application interface in response to the angular gesture.

### BRIEF DESCRIPTION OF THE DRAWINGS

Further features and advantages of the present invention will become apparent from the following detailed description, taken in combination with the appended drawings, in which:
FIG. 1 shows a system representation of a portable electronic device having a touch-sensitive display interface;
FIG. 2 shows a representation of portable electronic device;
FIG. 3 shows a representation of gestures on the portable electronic device;
FIGs. 4a-c shows a representation of a next tab gesture in a tab-based application interface;
FIGs. 5a-b shows an example of a previous tab gesture in a tab-based application interface;
FIG. 6 is a method for navigation in a tab-based application interface on a touch-sensitive display of a portable electronic device;
FIG. 7 is a further method for navigation in a tab-based application interface on a touch-sensitive display of a portable electronic device; and
FIG. 8 is yet a further method for navigation in a tab-based application interface on a touch-sensitive display of a portable electronic device.

It will be noted that throughout the appended drawings, like features are identified by like reference numerals.

### DETAILED DESCRIPTION

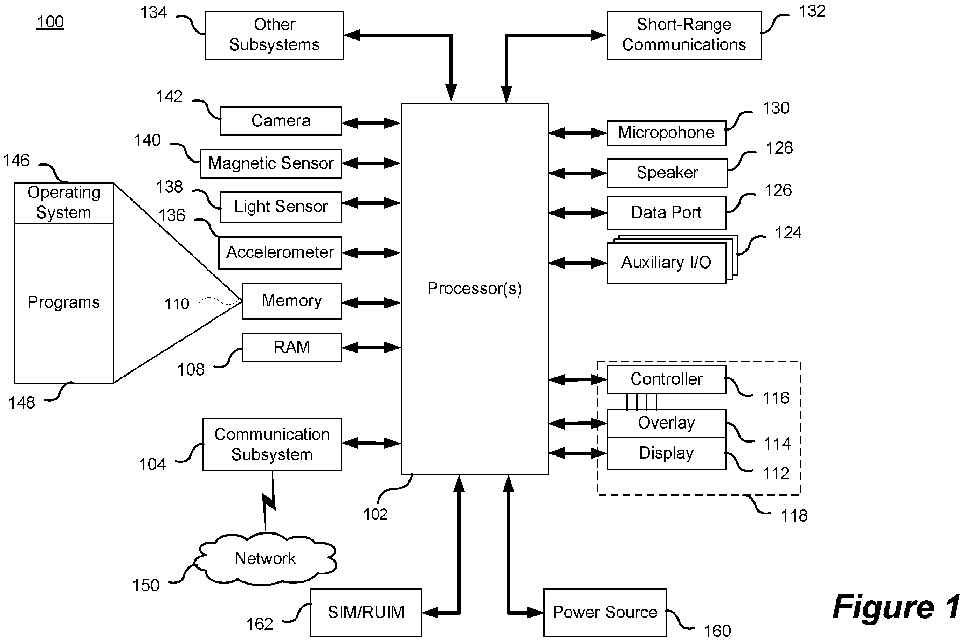

Embodiments are described below, by way of example only, with reference to Figures 1-8. For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not be considered as limited to the scope of the examples described herein.

Figure 1 show a block diagram of a portable electronic device in accordance with an example embodiment for allowing user navigation with a tab-based application interface. The portable electronic device include devices that provide an graphical user interface that is interacted with a touch-sensitive screen capable of receiving touch gestures. Examples of portable electronic devices include smart phones, wireless personal digital assistants (PDAs), laptops or notebooks, tablets, media players, and gaming devices, and so forth A processor 102, a multiple core processor or multiple processors may interface with component or modules of the device to provide functionality required. A touch-sensitive display 118 is coupled to the processor 102. The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 118 is a capacitive touch-sensitive display which includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The processor 102 interfaces with memory 110 providing an operating system 146 and programs or applications 148 such as a tab-based application interface providing instructions for execution by the processor 102. The tab-based application interface may be implemented in a web browser, document based applications or applications defining content views that are transitioned in a tabbed metaphor. Random access memory 108 is provided for the execution of the instructions and for processing data to be sent to or received from various components of the device. Various input/out devices or sensors may be provided such as an accelerometer 136, light sensor 138, magnetic sensor 140 such as a Hall Effect sensor, and one or more cameras 142 which may be used for detection of user input. A communication subsystem 104 is provided for enabling data to be sent or received with a local area network 150 or wide area network utilizing different physical layer and access technology implementations. A subscriber identity module or removable user identity module 162 may be provided depending on the requirement of the particular network access technology to provide user access or identify information. Short-range communications 132 may also be provided and may include near-field communication (NFC), radio frequency identifier (RFID), Bluetooth technologies. The device may also be provided with a data port 126 and auxiliary input/output interface for sending and receiving data. A microphone 130 and speaker 128 may also be provided to enable audio communications via the device 100.

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area. The non-display area may also be touch-sensitive to provide input to the device 100, although use of the non-display area for touch input is dependent on the implementation of the device 100.

One or more touches, also known as contact inputs, touch contacts or touch events, may be detected by the touch-sensitive display 118. The processor 102 may determine attributes of the touch, including a location of a touch. Touch location data may include an area of contact or a single point of contact, such as a point at or near a center of the area of contact, known as the centroid. A signal is provided to the controller 116 in response to detection of a touch. A touch may be detected from any suitable object, such as a finger, thumb, appendage, or other items, for example, a stylus, pen, or other pointers, depending on the nature of the touch-sensitive display 118. The location of the touch moves as the detected object moves during a touch. The controller 116 and/or the processor 102 may detect a touch by any suitable contact member on the touch-sensitive display 118. Similarly, multiple simultaneous touches are detected.

One or more gestures are also detected by the touch-sensitive display 118. A gesture is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 114 may evaluate swipes with respect to the origin point at which contact is initially made with the touch-sensitive overlay 114 and the end point at which contact with the touch-sensitive overlay 114 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 114 to initialize the gesture, a horizontal movement of the detected object from the origin point to an end point towards the right or left side of the touch-sensitive overlay 114 while maintaining continuous contact with the touch-sensitive overlay 114, and a breaking of contact with the touch-sensitive overlay 114. Similarly, a vertical swipe typically comprises an origin point towards the top or bottom of the touch-sensitive overlay 114 to initialize the gesture, a horizontal movement of the detected object from the origin point to an end point towards the bottom or top of the touch-sensitive overlay 114 while maintaining continuous contact with the touch-sensitive overlay 114, and a breaking of contact with the touch-sensitive overlay 114. In addition, breaking contact of a gesture can be gradual in that contact with the touch-sensitive overlay 114 is gradually reduced while the swipe is still underway.

For reference in the description a gesture is defined within the display area of the touch-sensitive overlay 114 where as a meta-navigation gesture may be detected by the touch-sensitive overlay 114 when it extends into the non-display area of the device 100. A meta-navigation gesture is a gesture that has an origin point that is outside the display area of the touch-sensitive overlay 114 and that moves to a position on the display area, non-display area, of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 114. Thus, two fingers may be utilized for meta-navigation gestures. Further, multi-touch meta-navigation gestures may be distinguished from single touch meta-navigation gestures and may provide additional or further functionality or be used to distinguish between types of information that the user may required to be displayed on the device which would also be dependent on the display area available for display.

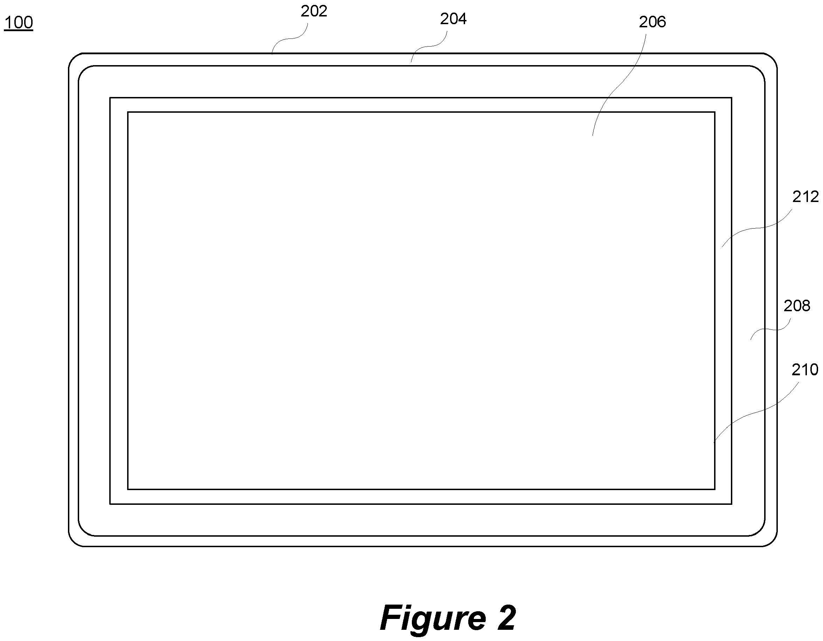

Figure 2 is a front view of an example of a portable electronic device 100. The portable electronic device 100 includes a housing 202 that encloses components such as shown in Figure 1. The housing 202 may include a back, sidewalls, and a front 204 that frames the touch-sensitive display 118.

In the example of Figure 2, the touch-sensitive display 118 is generally centered in the housing 202 such that a display area 206 of the touch-sensitive overlay 114 is generally centered with respect to the front 204 of the housing 202. The non-display area 208 of the touch-sensitive overlay 114 extends around the display area 206.

For the purpose of the present example, the touch-sensitive overlay 114 extends to cover the display area 206 and the non-display area 208, although the non-display are may not provide touch-sensitive input depending on the configuration of the device. Touches on the display area 206 may be detected and, for example, may be associated with displayed selectable features. Touches on the non-display area 208 may be detected, for example, to detect a meta-navigation gesture. Alternatively, meta-navigation gestures may be determined by both the non-display area 208 and the display area 206. The density of touch sensors may differ from the display area 206 to the non-display area 208. For example, the density of nodes in a mutual capacitive touch-sensitive display, or density of locations at which electrodes of one layer cross over electrodes of another layer, may differ between the display area 206 and the non-display area 208.

Gestures received on the touch-sensitive display 118 may be analyzed based on the attributes to discriminate between meta-navigation gestures and other touches, or non-meta navigation gestures. Meta-navigation gestures may be identified when the gesture crosses over a boundary near a periphery of the display 112, such as a boundary 210 between the display area 206 and the non-display area 208. In the example of Figure 2, the origin point of a meta-navigation gesture may be determined utilizing the area of the touch-sensitive overlay 114 that covers the non-display area 208.

A buffer region 212 or band that extends around the boundary 210 between the display area 206 and the non-display area 208 may be utilized such that a meta-navigation gesture is identified when a touch has an origin point outside the boundary 210 and the buffer region 212 and crosses through the buffer region 212 and over the boundary 210 to a point inside the boundary 210. Although illustrated in Figure 2, the buffer region 212 may not be visible. Instead, the buffer region 212 may be a region around the boundary 210 that extends a width that is equivalent to a predetermined number of pixels, for example. Alternatively, the boundary 210 may extend a predetermined number of touch sensors or may extend a predetermined distance from the display area 206. The boundary 210 may be a touch-sensitive region or may be a region in which touches are not detected.

Gestures that have an origin point in the buffer region 212, for example, may be identified as non-meta navigation gestures. Optionally, data from such gestures may be utilized by an application as a non-meta navigation gesture. Alternatively, data from such gestures may be discarded such that touches that have an origin point on the buffer region 212 are not utilized as input at the portable electronic device 100.

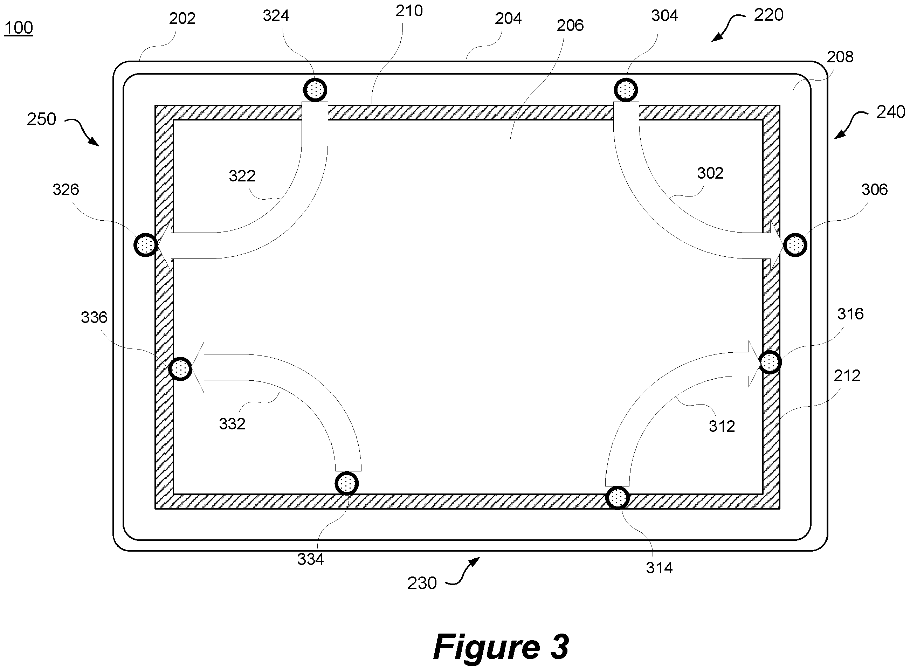

Figure 3 illustrates examples of angular gestures on the portable electronic device of Figure 1 on the touch-sensitive display 118. The buffer region 212 is illustrated in Figure 3 by hash markings for the purpose of explanation. As indicated, the buffer region 212 may not be visible to the user. For the purpose of explanation, touches are illustrated by circles at their points of origin. Arrows extending from the circles illustrate the paths of the touch input that form angular gesture. For simplicity the angular gesture is illustrated as an 90° elbow, however the touch path may vary, within predefined tolerances and still be considered to form an angular gesture to perform the navigation action between tabs. For example in connecting the start and end touch contact the gesture may form a more acute angle less than 90° by drawing the corner of the elbow more towards the center of the screen, however a 90° path may be extrapolated between the point based upon the location of the proximate edges to define the angular gesture.

Gestures may be defined in a direction order relative to the tab order. The angular gestures may for example define and order of movement such as next (forward) or previous (backward) through the tabs, the gestures formed to mimic the conceptual direction of the order of the tabs from top or bottom edges to the left or right side edges of the display. Alternatively the gestures may be define up or down angular gestures from the right 240 and left 250 edges to the top 220 or bottom 230 edges to move up or down through an order of tabs. In Figure 3 examples of next (or forward) angular gestures 302 312 and previous (or backwards) angular gestures 322 332 are shown. The gestures start and end proximate to the edge of the display defined by the buffer region 212 and transition through the touch-sensitive display area. For devices with a touch-sensitive non-display area 208 the gesture may be required to start and end within the non-display area 208 and fully transition the buffer region 202 to be a meta-navigation gesture. For portable electronic devices without a touch-sensitive non-display area 208, the gesture may be required to start and end within an area proximate to the display area 206 such as in the buffer region 212. That is the start and the end of the gesture must be within a defined threshold of the edge of the display to be considered an arcuate gesture to enable differentiation of the gestures. A device with a touch-sensitive non-display area 208 may not necessarily require the gesture to start and end within the non-display area 208 but may accept gestures that are near the buffer region 212.

In this example the forward gesture 302 has a starting contact 304 from the top edge of the portable electronic device 100 which starts in the non-display area 208 proximate to the edge of the display area 206 and terminates or finishes when the contact ends 306 at a perpendicular or adjacent edge defining an angular gesture between the start contact 304 and end contact 306. The start contact 304 of the gesture and the end contact 306 of the gesture cross the buffer region 212 and commence and terminate within the non-display area 208 to define the meta-navigation gesture. Although the gesture is shown as an arced segment it may be represented as a segment between a straight line to a 90° angle. Similar to the next (forward) gesture 302, a previous (backward) gesture 322 has a starting contact 324 also from the top edge 220 of the portable electronic device 100 but terminates in the non-display area 208 on the opposite perpendicular left edge 250 at ending contact 326. The next (forward) gesture 302 may also be defined relative to the bottom edge 230 of the device such as a gesture 312. The alternative next (forward) gesture 312 is shown as having a start contact 314 from the bottom edge 230 of the display and an end contact 316 within the buffer region proximate to the left edge 240 of the display before crossing the boundary 212. This gesture may not be defined as a meta-navigation gesture input as the non-display area may not be utilized to determine the start and end of the gesture, but may perform the same function. An alternative previous (backward) gesture 332 is shown with the start contact 334 at the bottom edge 230 of the device 100 and finishes with an end contact 336 on the left edge 250 where the start and end contacts are at the boundary 212 within the display area 206 proximate to the edge defined by the boundary 212. The gestures may be formed by different combinations start and end locations proximate to the edge of the display area 206 start and end location proximate or relative to the boundary 212 for the same gesture. That is the start contact may occur within the display area 206 but terminate on the non-display area 208 as long as they are within a defined threshold or based upon a particular configuration. The gesture may require the start and end occur within the same relative location with the edges of the display, that is both in the non-display area 208 or both at the boundary 212.

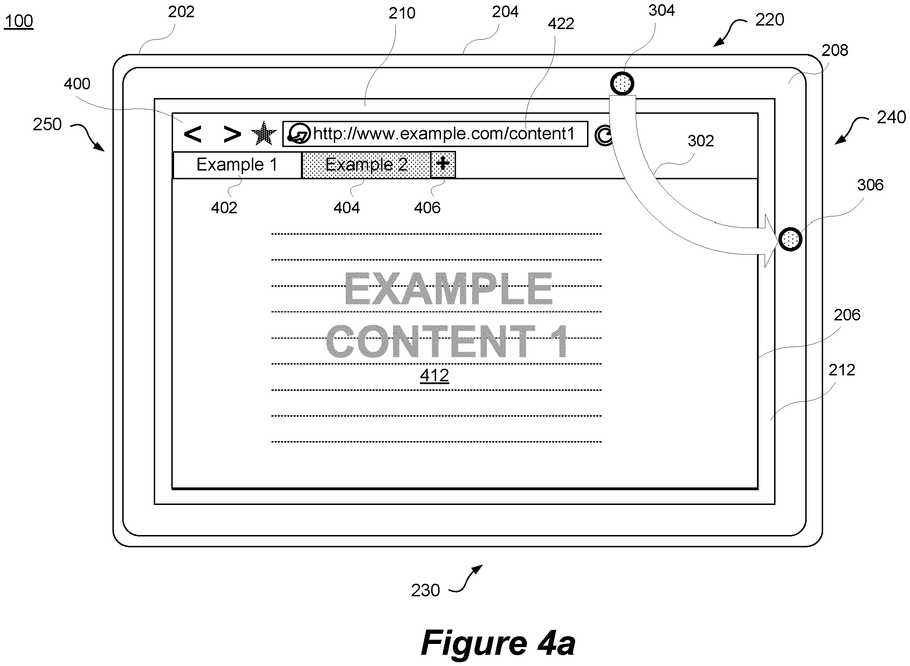

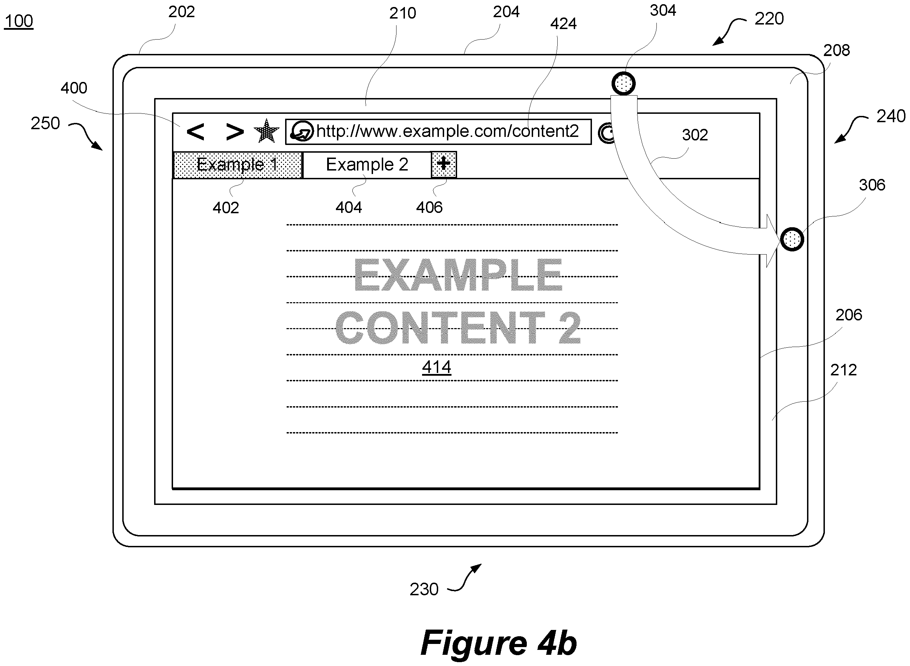

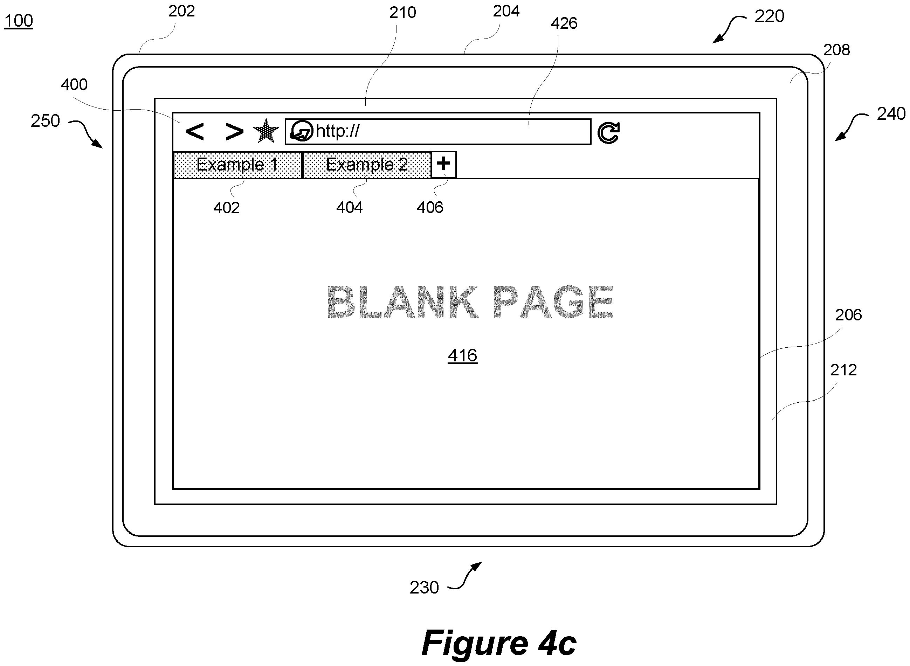

In Figure 4a a tab-based application interface such as a web browser 400 is shown. The web browser 400 has tabs, 402, 404 and 406; each tab can be associated with a respective universal resource locator (URL). The tabs can be selected to display the contact associated with the tab. The currently displayed tab 402 is associated with a URL 422 which displays content 412. Although a web browser 400 is shown in the tabbed application interface, other applications such as word processing, spreadsheet, presentation, drawing, illustration, photo editing or any application that allows content to be transitioned between using a tab or window configuration. In order to advance between tabs a gesture 302 is performed on the touch-sensitive display 118 to enable convenient selection of tabs. This gesture is useful when the user's hands are placed on either side of the device 100 and a simple gesture allows transition between tabs.. The gesture 302 starts with a touch contact 304 initiating proximate to the top edge 220 of the touch-sensitive display 118. The end of the touch contact 306 terminates proximate to a second contacted edge 240 of the touch sensitive display. The gesture traverses the touch-sensitive display 118 and an angular gesture is determined. The angular gesture forms and elbow shape or 90° transition between perpendicular or adjacent edges of the screen. The direction of the angular gesture determines the direction of navigation between the tabs. In response to the angular gesture in a forward direction, the web browser 400 transitions to the next tab 404 as shown in Figure 4b which would display content 414 associated with URL 424. For each gesture input a transition occurs to the next defined tab in the tab order. However if a subsequent gesture 302 occurs and a URL is not associated the tab in the forward direction, the user may be presented with a blank or new tab 406 which does not have content 416 associated with it. The user may then enter a URL 426 or browse to other navigational items which would be displayed on the associated tab.

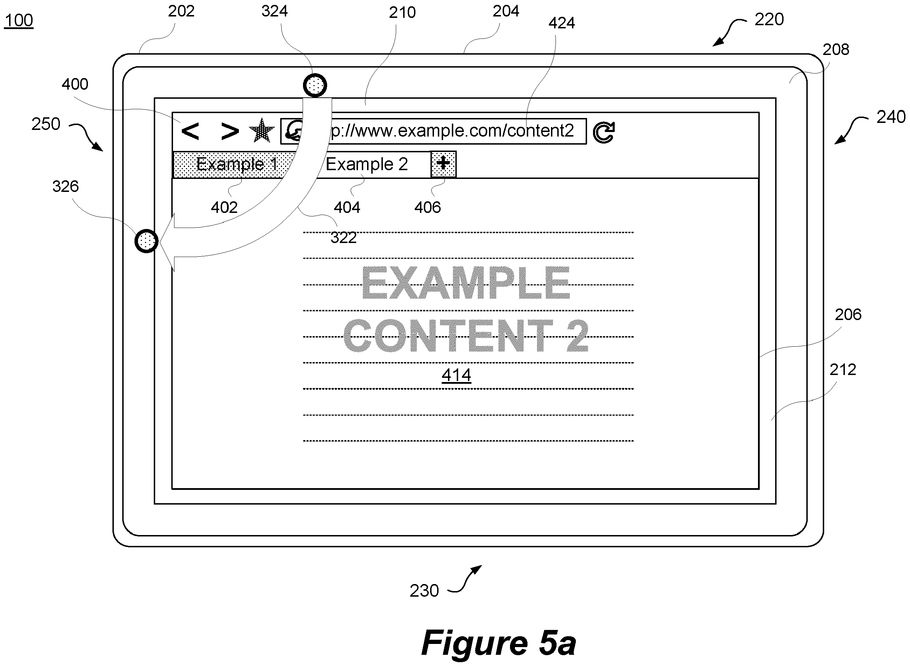

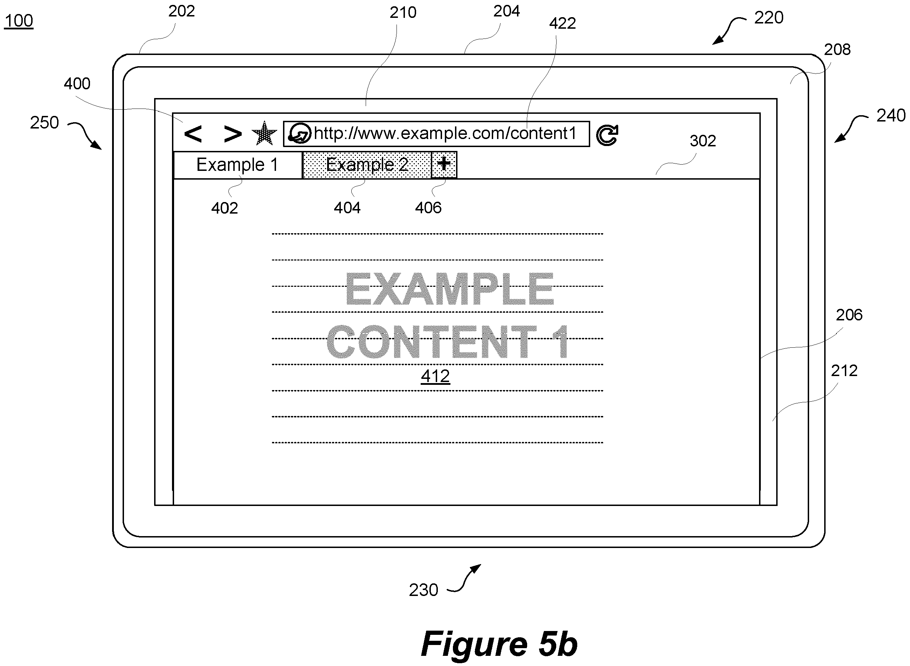

As shown in Figure 5a, the browser 400 is displaying tab 404 displaying content 414. The gesture 322 is performed by the user that starts with a touch contact 324 initiating proximate to the top edge 220 of the touch-sensitive display 118. The end of the touch contact 326 terminates proximate to a second contacted edge 250 of the touch sensitive display. The gesture traverses the touch-sensitive display 118 and an angular gesture is determined. The angular gesture forms and elbow shape or 90° transition between perpendicular or adjacent edges of the screen between the start and end contacts. The direction of the angular gesture determines the direction of navigation between the tabs and in this example to a previous tab by the associated gesture 322. The gesture 322 moves application backwards to display a previous tab 402 and displays the associated content 412. If a previous or back gesture 322 occurs when no additional tabs are present in the direction, the tabs may cycle back to the last tab or enable additional information to be displayed.

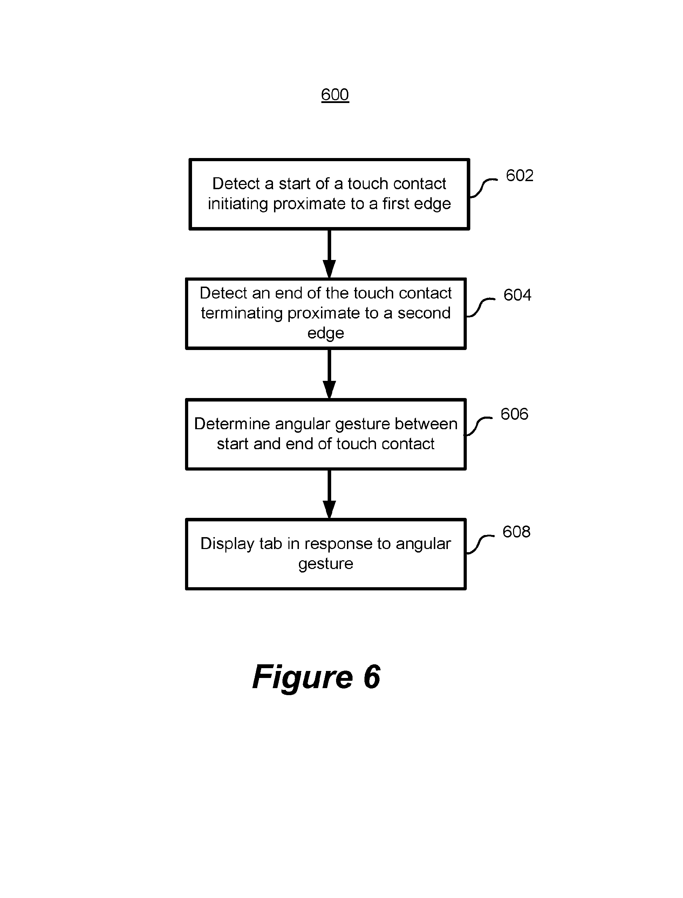

Figure 6 is a method for tabbed navigation in a tab-based application interface on a touch-sensitive display of a portable electronic device. A start of a touch contact initiating proximate to a first edge of the touch-sensitive display is detected (602). An end of the touch contact terminating proximate to a second contacted edge of the touch sensitive display is then detected (604) completing an input gesture. From the start touch contact and the end of the touch contact an angular gesture is determined (606). For the gesture to be an angular gesture, the start of the touch contact and the end of the touch contact are from the first edge being perpendicular to the second edge of the touch-sensitive display which are adjacent to each other. The angular gesture forms an elbow defining a 90° angle between the start of the touch contact and the end of the touch contact. In response to the angular gesture the tab-based application transitions to a tab to display the associated content, such as a webpage, document, new link, new document, media content, in the direction of the angular gesture and displays the associated content (608).

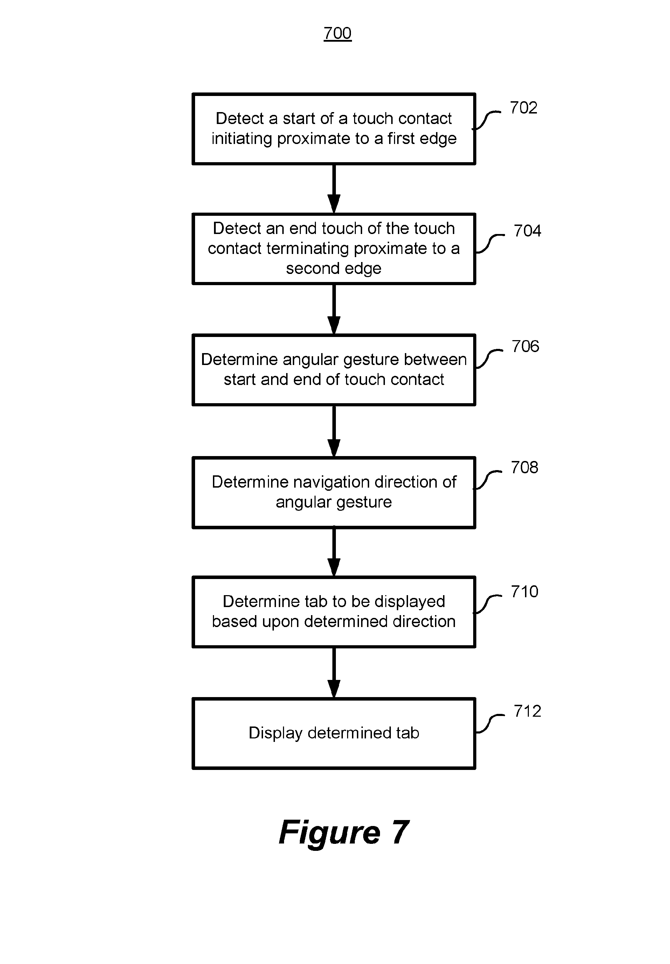

Figure 7 is a further method for tabbed navigation in a tabbed application interface on a touch-sensitive display of a portable electronic device. A start of a touch contact initiating proximate to a first edge of the touch-sensitive display is detected (702). An end of the touch contact terminating proximate to a second edge of the touch sensitive display is then detected (704) to complete the gesture. From the start touch contact and the end of the touch contact an angular gesture is determined (706). For the gesture to be an angular gesture, the start of the touch contact and the end of the touch contact are from the first edge being perpendicular to the second edge of the touch-sensitive display which are adjacent to each other. The angular gesture forms an elbow defining a 90° angle between the start of the touch contact and the end of the touch contact. A navigation direction is then determined from the angular gesture (708) such as moving forward or back, up or down, in the tab order. The tab associated with the direction is determined (710) and in response to the angular gesture the tab-based application transitions to a tab in the direction of the angular gesture and the associated content is displayed (712).

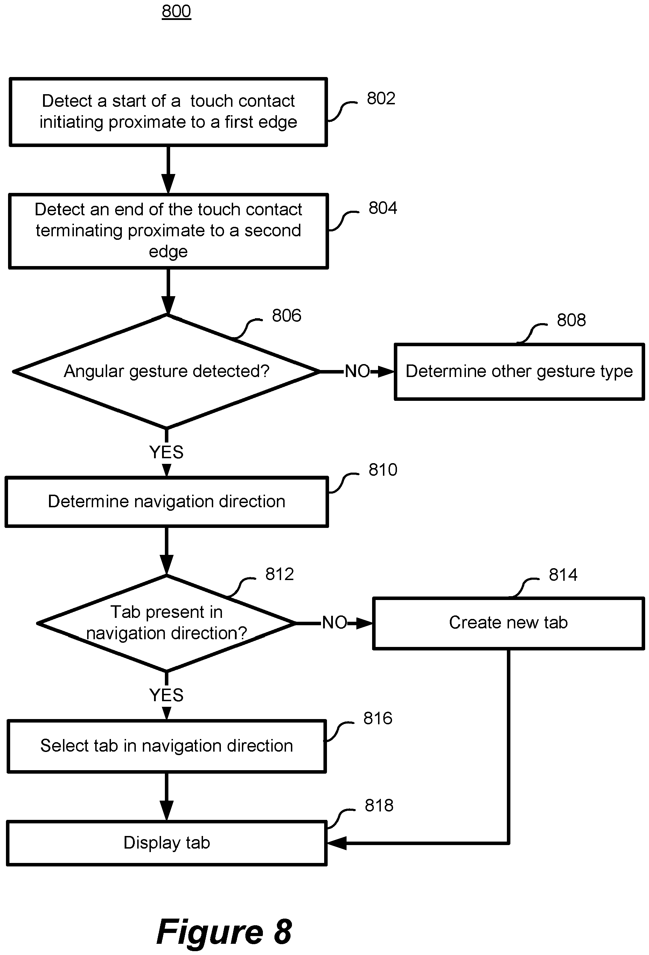

Figure 8 is yet a further method for tabbed navigation in a tabbed application interface on a touch-sensitive display of a portable electronic device. A start of a touch contact initiating proximate to a first contacted edge of the touch-sensitive display is detected (802). An end of the touch contact is then determined (804) for example when the user's finger is lifted from the display or held on the display to complete the gesture. From the start of touch contact to the end of the touch contact the type of gesture is determined (806). If the gesture is an (YES at 806) then the navigation direction, such as next (forward) or previous (backward), is determined (810). If the gesture is not an angular gesture (NO at 806), for example the gesture goes from the top edge of the display to the bottom edge of the display other associated gesture actions may be performed (808). The angular gesture forms an elbow defining a 90° angle between the start of the touch contact and the end of the touch contact and is used to determine a navigation direction based upon the conceptual order of the tabs relative to the gesture input (810). From the determined navigation direction, if a tab is present in the determined navigation direction (YES at 812) the tab is selected (816) and the associated content is displayed (818). If a tab is not present in the selected navigation direction (NO at 812) a new tab can be created (814) and displayed (818) to allow user to browse or enter to a new URL. Depending on the type of tab-based application if a tab is not defined other actions such as cycling to the first tab in the tab order or retrieving different types of content may be performed.

Although the drawings show a tab structure for the web browser the description is equally applicable to interfaces that may not display the content in a tab representation but provide an interface for accessing documents or content items through a common structure. For example multiple documents in a word processing application may utilize the angular gesture enables transition between documents in a convenient manner. The documents, though not presented as tab items can be defined as tabs with the application interface allowing the user to transition or 'tab' between the documents.

In some embodiments, any suitable computer readable memory can be used for storing instructions for performing the processes described herein. For example, in some embodiments, computer readable media can be transitory or non-transitory. For example, non-transitory computer readable media can include nonvolatile computer storage memory or media such as magnetic media (such as hard disks), optical media (such as compact discs, digital video discs, Blu-ray discs, etc.), semiconductor media (such as flash memory, read only memory (ROM), Flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

Although the description discloses example methods and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method for navigation in a tab-based application interface (400) on a touch-sensitive display (206) of a portable electronic device (100), the method comprising:
detecting (602) a start of a touch contact (304, 314, 324, 334) initiating proximate to a first edge (220, 230) of the touch-sensitive display (206);
detecting (604) an end of the touch contact (306, 316, 326, 336) terminating proximate to a second edge (240, 250) of the touch sensitive display (206);
determining (606) an angular gesture (302, 312, 322, 332) when the start of the touch contact (304, 314, 324, 334) and the end of the touch contact (306, 316, 326, 336) are from the first edge (220, 230) being perpendicular to the second edge (240, 250) of the touch-sensitive display (206); and
displaying (608) content associated with a tab (402, 404, 406) on the touch-sensitive display in the tab-based application interface (400) in response to the angular gesture (302, 312, 322, 332).

2. The method of claim 1 further comprising:
determining a navigation direction of the angular gesture based on where the second edge is located in relation to the touch-sensitive display; and
determining the tab to be displayed based upon the navigation direction.

3. The method of claim 2 wherein the displayed tab is selected from one or more ordered tabs in relation to the determined navigation direction.

4. The method of any one of claims 1 to 3 wherein when the second edge is located to a right edge of the touch-sensitive display the navigation direction of the angular gesture is forward to a next tab of the one or more ordered tabs.

5. The method of claim 4 wherein when a tab in the one or more ordered tabs is not defined in the determined navigation direction, a new tab is created.

6. The method of claim 4 wherein when the second edge is located to a left edge of the touch-sensitive display the navigation direction of the angular gesture is backwards to a previous tab of the one or more ordered tabs.

7. The method of any one of claims 1 to 6 wherein the touch-sensitive display is surrounded by a touch-sensitive non-display area, the angular gesture defines a meta-navigation gesture where the start of the touch contact is initiated within the touch sensitive non-display area and the end of the touch contact is terminated in the touch-sensitive non-display area.

8. The method of claim 7 wherein the start touch contact and the end touch contact of the angular gesture are joined by a contact path over the touch-sensitive display to define the meta-navigation gesture.

9. The method of claim 8 wherein the contact path of the angular gesture forms an arcuate elbow between the first edge and second edge to define the meta-navigation gesture.

10. The method of any one of claims 1 to 9 wherein the start touch contact is initiated within a defined threshold distance from the edge of the touch-sensitive display and the end touch contact is terminated within a defined threshold distance from a buffer region defining the edge of the touch-sensitive display.

11. The method of claim 10 wherein the start touch contact and the end touch contact of the angular gesture are joined by a contact path over the touch-sensitive display.

12. The method of claim 11 wherein the contact path of the angular gesture form an arcuate elbow between the first edge and second edge or a 90 degree swipe between adjacent edges of the touch-sensitive display.

13. The method of any one of claims 1 to 12 wherein the tab-based application is an Internet web browser application, wherein each tab is associated with a respective universal resource locator.

14. A portable electronic device comprising:
a touch-sensitive display;
a processor coupled to the touch-sensitive display; and
a memory coupled to the processor, the memory containing instructions for navigation in a tab-based application interface the instructions when executed by a processor performing the method of claims 1 to 13.

15. A computer readable memory containing instructions for navigation in a tab-based application interface on a touch-sensitive display of a portable electronic device, the instructions when executed by a processor performing the method of claims 1 to 13.
